(19) **Europäisches Patentamt**
**European Patent Office**
**Office européen des brevets**

(11) **EP 2 388 928 B1**

(12) **FASCICULE DE BREVET EUROPEEN**

(45) Date de publication et mention
de la délivrance du brevet:
**01.05.2013 Bulletin 2013/18**

(51) Int Cl.:
***H04B 1/28*** (2006.01)

(21) Numéro de dépôt: **11165280.6**

(22) Date de dépôt: **09.05.2011**

(54) **Dispositif de transposition flexible en fréquence large bande, et récepteur de télécommande satellite associé**

GERÄT ZUR FLEXIBLEN FREQUENZUMSETZUNG IM BREITBAND UND ENTSPRECHENDER EMPFÄNGER ZUR SATELLITEN TELEKOMMUNIKATION

APPARATUS FOR FLEXIBLE FREQUENCY TRANSLATION WITHIN BROADBAND AND CORRESPONDING RECEIVER FOR SATELLITE TELECOMMUNICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2010 FR 1002153**

(43) Date de publication de la demande:
**23.11.2011 Bulletin 2011/47**

(73) Titulaire: **Thales**
**92200 Neuilly Sur Seine (FR)**

(72) Inventeur: **Populus, Thierry**
**31470 Fontenilles (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
WO-A1-03/023985     US-A1- 2007 087 714
US-A1- 2007 224 961

**Description**

La présente invention se rapporte à un dispositif de double transposition en fréquence pour récepteur radio, notamment pour un récepteur de télécommande satellite ainsi qu'à un récepteur de télécommande satellite comportant un tel dispositif.

Un récepteur de télécommande satellite est situé à bord d'un satellite géostationnaire ou défilant et met en oeuvre une liaison de télécommande et mesure de distance entre les stations au sol et ledit satellite connue sous l'appellation liaison TTC de l'anglais « Telemetry, Tracking and Command »

Les solutions connues d'architectures de récepteurs TTC utilisent un oscillateur local délivrant le plus souvent une fréquence fixe ou un nombre restreint de fréquences. Par la variation de la fréquence du ou des oscillateurs locaux, on obtient une flexibilité de la fréquence de réception du récepteur. Cette fréquence peut être rendue programmable et pilotable à distance par l'utilisation d'un oscillateur local à synthèse de fréquence qui peut être entière ou fractionnaire.

L'utilisation d'un synthétiseur de type fractionnaire connu combine les avantages d'une couverture en fréquence très large bande tout en assurant un pas de sélection en fréquence très fin. Cette possibilité de reconfigurer la fréquence d'un récepteur TTC permet par exemple de coordonner les fréquences de plusieurs satellites lors d'un changement de position orbitale ou d'éviter l'utilisation de certaines fréquences brouillées.

Un des inconvénients majeurs de l'utilisation d'un synthétiseur fractionnaire dans les architectures de récepteur TTC provient de la dégradation des performances pour certaines bandes de fréquence prédéfinies.

La demande de brevet US 2007/224961 décrit un circuit de double conversion de fréquence qui vise à limiter ou supprimer les fréquences harmoniques élevées au moyen de l'introduction d'un filtre passe-bas. Cependant, l'utilisation d'un tel filtre n'est efficace pour limiter le niveau des raies parasites, que si celles-ci sont situées à une distance en fréquence suffisamment importante des fréquences $F_{OL1}$, $F_{OL2}$ des oscillateurs locaux et n'est pas suffisant lorsque les harmoniques sont trop proches des valeurs $F_{OL1}$, $F_{OL2}$.

La demande de brevet US 2007/087714 décrit un autre dispositif de double conversion en fréquence qui concerne la prise en compte de signaux interférents émis par une source extérieure dans une bande de fréquences connue et qui peuvent potentiellement perturber les signaux générés par l'oscillateur local. Le problème de la suppression ou de la limitation des fréquences parasites générées par les synthétiseurs de fréquences et qui peuvent perturber les signaux des oscillateurs locaux n'y est pas traité.

On connait enfin la demande internationale WO 03/023985 qui décrit un autre dispositif de double conversion de fréquence pour récepteurs radio qui vise à lutter contre les interférences engendrées par des signaux présents dans des canaux adjacents à celui du signal reçu par le récepteur. Le dispositif décrit dans cette demande ne vise pas la suppression ou la limitation de fréquences parasites dues à la synthèse fractionnaire de fréquences à certaines valeurs particulières.

La présente invention a notamment pour objectif de résoudre les limitations des synthétiseurs fractionnaires connus en supprimant les bandes de fréquences interdites inhérentes à de tels dispositifs. La solution apportée par l'invention consiste à utiliser la flexibilité en fréquence d'un second oscillateur local à synthèse de fréquences que comporte le récepteur selon l'invention. Par le pilotage adéquat et simultané des deux oscillateurs locaux, les bandes de fréquence interdites d'un synthétiseur fractionnaire peuvent être évitées afin de permettre au récepteur de couvrir une très large bande de fréquence sans discontinuité.

A cet effet l'invention a pour objet un dispositif de double transposition en fréquence comportant au moins une première chaîne d'amplification et de filtrage recevant un signal à une première fréquence $F_{RF}$, un premier mélangeur de fréquences réalisant une première transposition en fréquence dudit signal vers une première fréquence intermédiaire $F_{FI1}$ et délivrant ledit signal transposé en entrée d'une deuxième chaîne d'amplification et de filtrage, un second mélangeur de fréquences réalisant une deuxième transposition vers une seconde fréquence intermédiaire $F_{F12}$ du signal délivré par ladite deuxième chaîne et délivrant ledit signal transposé en entrée d'une troisième chaîne d'amplification et de filtrage, un premier synthétiseur de fréquences fractionnaire, de bande de boucle B, apte à produire une première fréquence synthétisée $F_{OL1}$ en entrée dudit premier mélangeur et un second synthétiseur de fréquences entière ou fractionnaire apte à produire une seconde fréquence synthétisée $F_{OL2}$ en entrée dudit second mélangeur, caractérisé en ce qu'il comporte en outre des moyens de pilotage des fréquences $F_{OL1}$, $F_{OL2}$ desdits premier et second synthétiseurs adaptés à exécuter les étapes suivantes :

    o Initialisation de la fréquence $F_{OL2}$ à une première valeur donnée $F_{OL2,A}$,
    o Pour un couple de fréquences ($F_{RF}$, $F_{F12}$) donné, détermination de la fréquence $F_{OL1}$ à l'aide des relations suivantes :

        ■ Si $F_{RF} > F_{OL1}$ et $F_{FI1} < F_{OL2}$, $F_{RF} = F_{OL1} + F_{OL2} - F_{F12}$ (5),
        ■ Si $F_{RF} > F_{OL1}$ et $F_{FI1} > F_{OL2}$, $F_{RF} = F_{OL1} + F_{OL2} + F_{F12}$ (6),
        ■ Si $F_{RF} < F_{OL1}$ et $F_{FI1} > F_{OL2}$, $F_{RF} = F_{OL1} - F_{OL2} - F_{FI2}$ (7),

■ Si $F_{RF} < F_{OL1}$ et $F_{FI1} < F_{OL2}$, $F_{RF} = F_{OL1} - F_{OL2} + F_{FI2}$ (8),

○ Si la valeur obtenue de $F_{OL1}$ est comprise dans une bande de fréquence de borne inférieure $A.F_{REF} - B.X$ et de borne supérieure $A.F_{REF} + B.X$ où A est un entier strictement positif et X est un paramètre donné, modification de la fréquence $F_{OL2}$ à une seconde valeur $F_{OL2,B}$ déterminée de façon à ce que la différence, en valeur absolue, entre $F_{OL2,A}$ et $F_{OL2,B}$ respecte les deux conditions suivantes :;

$$|F_{OL2,B} - F_{OL2,A}| > AF_{REF} + 2B.X$$

$$|F_{OL2,B} - F_{OL2,A}| < AF_{REF} - 2B.X$$

○ Transmission des valeurs de fréquence $F_{OL1}$ et $F_{OL2}$ auxdits synthétiseurs de fréquence.

Dans une variante de réalisation de l'invention, lesdits moyens de pilotage des fréquences $F_{OL1}$, $F_{OL2}$ sont adaptés à exécuter initialement et pour un ensemble de couples de fréquences $F_{RF}$, $F_{FI2}$ donnés lesdites étapes de calcul permettant de déterminer les valeurs associées des fréquences $F_{OL1}$, $F_{OL2}$ desdits synthétiseurs de fréquence et à enregistrer l'ensemble des fréquences $F_{RF}$, $F_{FI2}$, $F_{OL1}$, $F_{OL2}$ obtenues dans une mémoire qu'ils comportent.

Dans une autre variante de réalisation de l'invention, lesdits moyens de pilotage des fréquences $F_{OL1}$, $F_{OL2}$ sont réalisés par un circuit intégré de type ASIC ou FPGA comprenant au moins une mémoire.

L'invention a également pour objet un récepteur de télécommande pour un satellite géostationnaire comportant au moins des moyens de démodulation d'un signal à la fréquence intermédiaire $F_{FI2}$ et un dispositif de double transposition selon l'invention recevant un signal à la fréquence $F_{RF}$ et délivrant ledit signal transposé à la fréquence intermédiaire $F_{FI2}$.

D'autres caractéristiques apparaîtront à la lecture de la description détaillée donnée à titre d'exemple et non limitative qui suit faite en regard de dessins annexés qui représentent :

La figure 1, un synoptique de l'architecture d'un récepteur de télécommande satellite TTC selon l'art antérieur,
La figure 2, un synoptique d'un oscillateur local à synthétiseur fractionnaire selon l'art antérieur,
La figure 3, une table d'application numérique illustrant la relation entre la fréquence $F_{OL1}$ et les fréquences parasites induites par l'utilisation d'un synthétiseur fractionnaire,
La figure 4, un exemple de bandes de fréquences inutilisables par un synthétiseur fractionnaire,
La figure 5, un synoptique de l'architecture d'un récepteur de télécommande satellite TTC selon l'invention,
La figure 6, une table d'application numérique illustrant la détermination des fréquences $F_{OL1}$ et $F_{OL2}$.

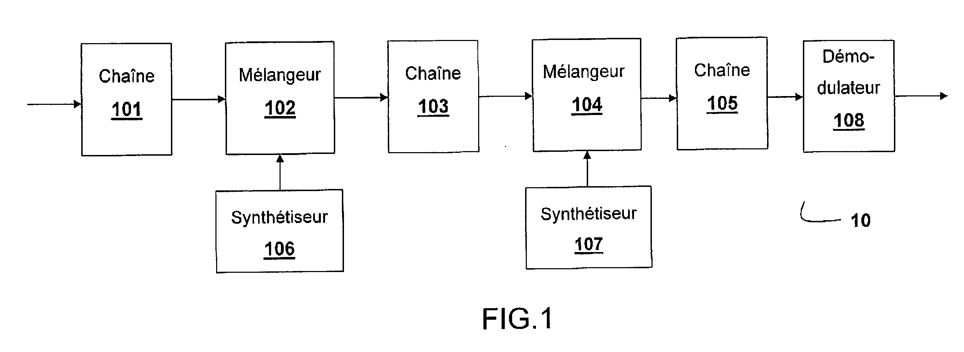

La figure 1 décrit l'architecture d'un récepteur TTC 10 selon l'art antérieur. Il comporte au moins une chaine de gain 101 radio fréquence recevant un signal à une fréquence $F_{RF}$, un premier mélangeur 102 de fréquences qui réalise une première transposition en fréquence du signal délivré par la chaîne de gain 101 vers une première chaine de gain 103 à fréquence intermédiaire $FI_1$ et un second mélangeur 104 de fréquences réalisant une deuxième transposition en fréquence du signal délivré par la chaine de gain 103 à fréquence intermédiaire vers une seconde chaîne de gain 105 à fréquence intermédiaire $FI_2$. Les chaines de gain 101,103,105 constituent essentiellement des moyens de filtrage et/ou d'amplification des signaux qu'elles reçoivent en entrée.

Le récepteur TTC 10 comporte également un premier oscillateur local à synthèse de fréquence fractionnaire 106 générant une fréquence et un second oscillateur local à synthèse de fréquence entière ou fractionnaire 107 tous deux aptes à générer des fréquences synthétisées $F_{OL1}$, $F_{OL2}$ nécessaires aux deux transpositions successives. La double transposition de fréquence réalisée par les deux oscillateurs locaux 106,107 est nécessaire pour passer d'une fréquence élevée $F_{RF}$ en entrée du récepteur à une fréquence plus faible $FI_2$ en entrée des moyens de démodulation 108 du signal.

La fréquence $FI_1$, est obtenue par transposition de la fréquence $F_{RF}$ par la fréquence $F_{OL1}$. La relation qui les lie est :

$$F_{FI1} = F_{RF} - F_{OL1} \text{ si } F_{RF} > F_{OL1} , (1)$$

ou

$$F_{FI1} = F_{OL1} - F_{RF} \text{ si } F_{RF} < F_{OL1} . (2)$$

La fréquence $FI_2$ est obtenue par transposition de la fréquence $FI_1$, par la fréquence $F_{OL2}$. La relation qui les lie est :

$$F_{FI2} = F_{FI1} - F_{OL2} \text{ si } F_{FI1} > F_{OL2} , (3)$$

ou

$$F_{FI2} = F_{OL2} - F_{FI1} \text{ si } F_{FI1} < F_{OL2}.(4)$$

Par souci de simplification, la suite de la description est basée sur les relations (1) et (4) sachant que l'invention s'applique de façon identique aux cas d'application des relations (2) et (3).

On obtient ainsi, en combinant les relations (1) et (4) l'expression $F_{RF} = F_{OL1} + F_{OL2} - F_{FI2}$ (5)

Les moyens de démodulation 108 fonctionnent avec un signal d'entrée à fréquence fixe, la fréquence $F_{FI2}$ est donc une constante imposée par les spécifications du système.

Le récepteur opère sur une large bande de fréquence : $F_{RFmin} < F_{RF} < F_{Rfmax}$.

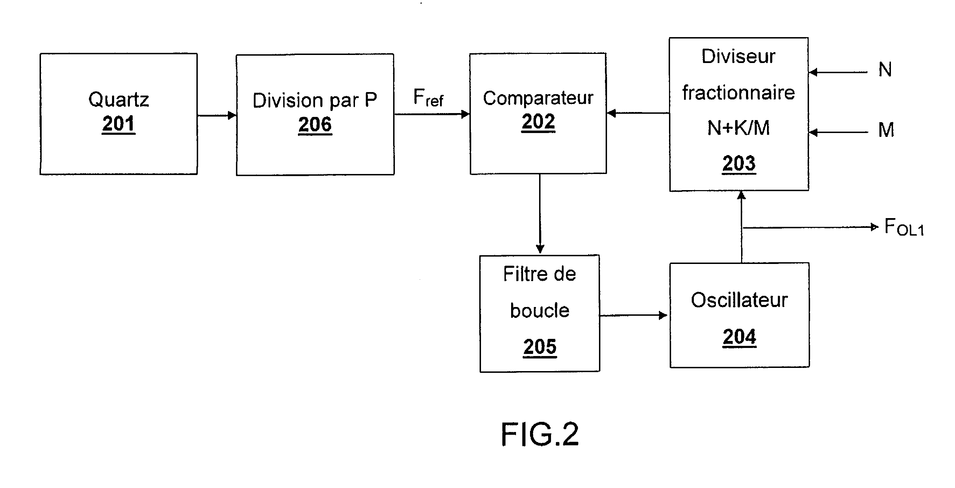

La figure 2 schématise l'architecture d'un oscillateur local à synthèse fractionnaire selon l'art antérieur.

Un oscillateur local à synthèse fractionnaire 106 comporte au moins les éléments suivants. Un oscillateur à quartz 201 délivre une fréquence fixe de référence $F_{REF}$, éventuellement préalablement divisée 206 par un facteur P, vers un comparateur 202. Un diviseur fractionnaire 203 réalise une division en fréquence dans le rapport N+K/M où N et K sont des paramètres programmables et M est le coefficient fractionnaire du synthétiseur 106 (0<K<M). Un comparateur 202 assure l'égalité entre la fréquence $F_{REF}$ et la fréquence $F_{OL1}/(N+K/M)$ afin d'établir la relation suivante $F_{OL1} = F_{REF} \times (N+K/M)$. L'oscillateur local à synthèse fractionnaire comporte en outre un filtre de boucle 205 dont une fonction est le filtrage du bruit de phase et des éventuelles raies parasites et un oscillateur contrôlé en tension 204.

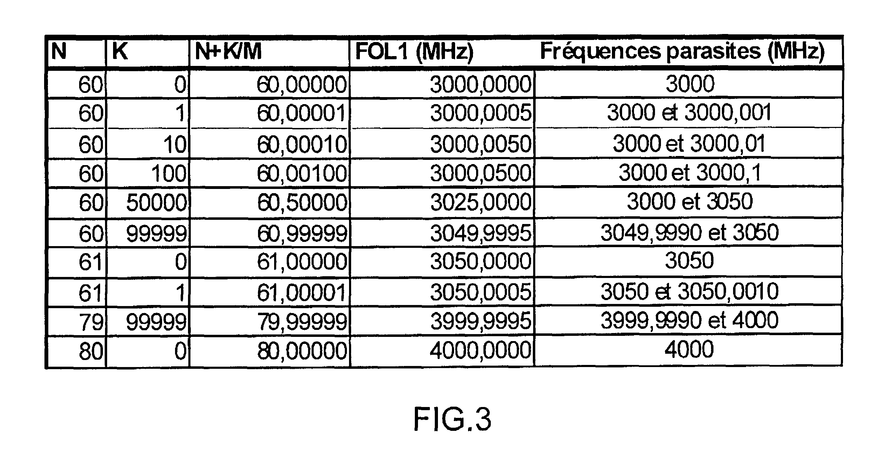

La figure 3 illustre un exemple d'application numérique pour la génération de la fréquence $F_{OL1}$ comprise entre 3000 et 4000 MHz à partir d'une fréquence de référence $F_{REF}$ de 50MHz et un paramètre M=100000. Dans cet exemple N est compris entre 60 et 80, K entre 0 et 99999.

Le pas de fréquence de l'oscillateur local est de 500Hz.

N et K sont deux paramètres de commandes de l'oscillateur local.

L'architecture d'un synthétiseur fractionnaire selon l'art antérieur tel que décrit à la figure 1 présente certaines limitations. Par interaction entre la fréquence $F_{OL1}$ et la fréquence de comparaison $F_{REF}$. il existe un phénomène connu de création de raies parasites qui dégradent la pureté spectrale du signal généré par le synthétiseur fractionnaire. Ces raies parasites se produisent de part et d'autre de la fréquence $F_{OL1}$ à une distance en fréquence égale à $\Delta F = \pm |F_{OL1} - (A.F_{REF})|$ avec $(A.F_{REF})$ la valeur multiple de $F_{REF}$ le plus proche de $F_{OL1}$, A étant un entier positif et $|\ |$ désignant la valeur absolue d'un nombre.

La dernière colonne du tableau de la figure 3 indique les fréquences des raies parasites observées pour différentes valeurs de fréquence $F_{OL1}$ dans une bande de fréquence utile comprise entre 3 GHz et 4 GHz et une fréquence $F_{REF}$ fixe égale à 50MHz. Le tableau de la figure 3 ne représente que quelques exemples de valeurs de fréquence $F_{OL1}$ qu'il est possible de générer. On peut voir que les fréquences des raies parasites sont confondues avec la fréquence $F_{OL1}$ lorsque celle-ci est égale à un multiple de la fréquence $F_{REF}$. Lorsque $F_{OL1}$ n'est pas égale à un multiple de la fréquence $F_{REF}$, deux raies parasites apparaissent de part et d'autre de la fréquence $F_{OL1}$ et sont d'autant plus éloignées de celle-ci que la valeur de la fréquence $F_{OL1}$ s'éloigne d'un multiple de la fréquence $F_{REF}$ et se rapproche d'un multiple de la fréquence $F_{REF}/2$. Dans l'exemple numérique de la figure 3, la distance en fréquence entre la fréquence $F_{OL1}$ et les raies parasites est la plus élevée pour $F_{OL1}$ = 3025 MHz. Les raies parasites sont localisées autour des fréquences multiples de la fréquence $F_{REF}$.

Le filtre de boucle 205 du synthétiseur fractionnaire 106 a notamment pour fonction de filtrer le bruit de phase et les raies parasites. Les performances de filtrage sont réglées en fonction d'un paramètre de bande de boucle qui est exprimé en Hertz. Ce paramètre est au moins fixé de façon à optimiser au moins le niveau de bruit de phase de l'oscillateur local. Les raies parasites sont également filtrées par le filtre de boucle 205 à un niveau acceptable pour le fonctionnement du récepteur TTC lorsque la distance $\Delta F$ entre une raie parasite et la fréquence $F_{OL1}$ est supérieure à X fois la bande de boucle du synthétiseur fractionnaire 104. A titre d'exemple, le nombre X peut être pris égal à 10. Le paramètre X est un nombre entier ou non et est réglé en fonction de la tolérance du récepteur aux perturbations liées aux raies parasites.

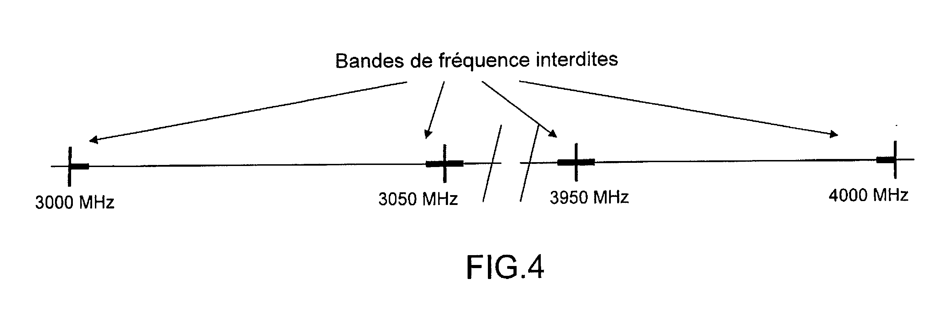

En reprenant l'exemple numérique de la figure 3 et pour une bande de boucle B égale à 250kHz, les raies parasites pénalisantes pour le récepteur TTC sont situées dans des bandes de fréquence de $\pm$ 2.5MHz tous les 50MHz ce qui correspond à 10% de la bande totale. Ces bandes de fréquence représentent ainsi des bandes interdites où il n'est pas possible de générer une fréquence $F_{OL1}$ sans apparition de raies parasites. Ainsi, l'utilisation d'un synthétiseur fractionnaire ne permet pas de couvrir de façon continue toute la bande de fréquence souhaitée avec un niveau de dégradation acceptable. De façon générale, le synthétiseur fractionnaire ne fonctionnera pas correctement pour des fréquences $F_{OL1}$ situées dans des bandes de largeur 2B.X centrées autour des fréquences A.$F_{REF}$ avec A un entier strictement positif. La figure 4 schématise la répartition en fréquence des bandes interdites pour les applications numériques indiquées à la figure 3.

La bande de fréquence de fonctionnement du récepteur TTC $F_{RF}$ est liée à la bande couverte par le synthétiseur fractionnaire 106 par la relation suivante $F_{RF} = F_{OL1} + F_{OL2} - F_{FI2}$. Les bandes interdites ou inutilisables d'un tel synthétiseur fractionnaire 106 se répercutent sur la bande utile d'entrée du récepteur TTC.

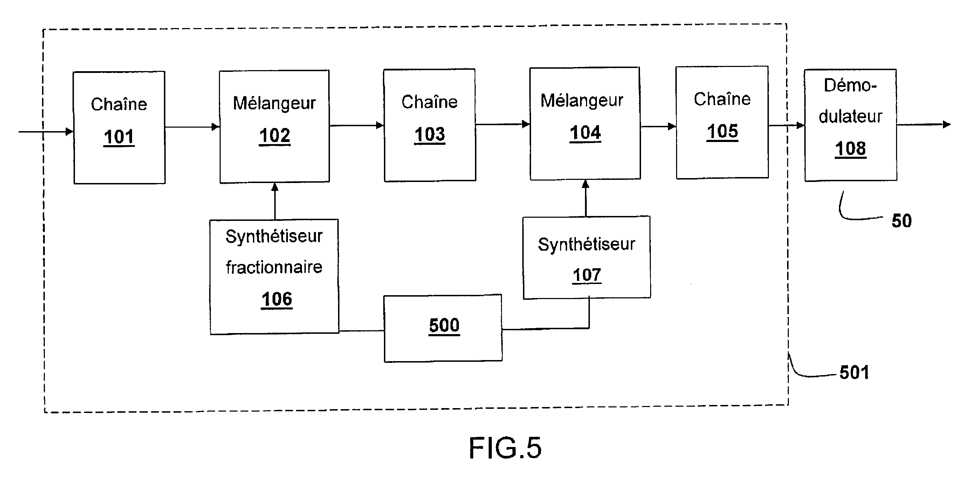

Pour résoudre ce problème, le récepteur TTC selon l'invention comporte, en outre des éléments déjà mentionnés à l'appui de la figure 1, un dispositif de pilotage de fréquence 500, tel que représenté à la figure 5, qui a pour fonction la détermination des fréquences adaptées de chaque synthétiseur 106,107 pour pouvoir couvrir en entrée du récepteur TTC toute la bande de fréquence souhaitée de façon continue sans avoir à éviter les bandes de fréquence interdites précédemment mentionnées. Les bandes interdites du premier synthétiseur fractionnaire 106 sont évitées par un changement adéquat de la fréquence du second synthétiseur 107 qui est adapté à générer au moins deux fréquences distinctes $F_{OL2,A}$ et $F_{OL2,B}$ dont l'écart en fréquence est supérieur strictement à la largeur d'une bande interdite, c'est-à-dire 2B.X ou 5 MHz avec les valeurs numériques utilisées pour l'exemple de la figure 3. Le second synthétiseur 107 est préférablement un oscillateur local à synthèse entière mais peut également être un oscillateur local à synthèse fractionnaire.

L'architecture d'un récepteur TTC selon l'invention est illustrée à la figure 5. Ce récepteur comporte en plus des éléments déjà décrits à l'appui de la figure 1, un dispositif 500 qui permet le pilotage des fréquences $F_{OL1}$ et $F_{OL2}$. Pour un couple de fréquences ($F_{RF}$, $F_{FI2}$) donné, le dispositif 500 selon l'invention exécute les étapes suivantes.

La fréquence du second synthétiseur 107 est initialement fixée à sa première valeur $F_{OL2} = F_{OL2,A}$.

La valeur de la fréquence $F_{OL1}$ du premier synthétiseur fractionnaire 106 est déterminée à partir de la relation (5) $F_{RF} = F_{OL1} + F_{OL2} - F_{FI2}$ dans le cas où $F_{RF} > F_{OL1}$ et $F_{FI1} < F_{OL2}$. Trois autres cas peuvent se produire.

$$\text{Si } F_{RF} > F_{OL1} \text{ et } F_{FI1} > F_{OL2}, \text{ alors } F_{RF} = F_{OL1} + F_{OL2} + F_{FI2} \quad (6)$$

$$\text{Si } F_{RF} < F_{OL1} \text{ et } F_{FI1} > F_{OL2}, \text{ alors } F_{RF} = F_{OL1} - F_{OL2} - F_{FI2} \quad (7)$$

$$\text{Si } F_{RF} < F_{OL1} \text{ et } F_{FI1} < F_{OL2}, \text{ alors } F_{RF} = F_{OL1} - F_{OL2} + F_{FI2} \quad (8)$$

Si la valeur obtenue pour $F_{OL1}$ par application des relations (5),(6),(7) ou (8) coïncide avec une valeur comprise dans une bande interdite, à savoir une bande de largeur 2B.X centrée sur une fréquence de valeur A.$F_{REF}$, ladite bande étant comprise dans la bande utile de fréquence [$F_{RFmin}$, $F_{Rfmax}$] d'entrée du récepteur, alors et dans ce cas seulement, la fréquence du second synthétiseur 107 est modifiée et affectée à sa seconde valeur $F_{OL2} = F_{OL2,B}$. Cette deuxième valeur présente au moins un écart supérieur à 2B.X et inférieur à $F_{REF}$ -2B.X avec la première valeur. Il en résulte ainsi qu'on évite la génération de la fréquence $F_{OL1}$ dans une bande interdite tout en permettant au récepteur de rester compatible du couple de fréquences ($F_{RF}$,$F_{FI2}$) imposé par des contraintes liées au système. De façon plus générale, la condition à respecter par la fréquence $F_{OL2,B}$ est que le choix de sa valeur permette d'éviter que la valeur de la fréquence $F_{OL1}$ ne coïncide avec une valeur située dans une bande interdite, c'est-à-dire une valeur comprise dans une bande de fréquence de borne inférieure A.$F_{REF}$ - B.X et de borne supérieure A.$F_{REF}$ + B.X. Cette condition se traduit de façon générale par les deux inégalités suivantes qui doivent être respectées cumulativement:

$$|F_{OL2,B} - F_{OL2,A}| > AF_{REF} + 2B.X$$

$$|F_{OL2,B} - F_{OL2,A}| < AF_{REF} - 2B.X$$

avec A un entier positif ou nul.

Le dispositif 500 selon l'invention exécute, pour un couple de fréquences ($F_{RF}$, $F_{FI2}$) donné, les étapes précédentes afin de générer les fréquences ($F_{OL1}$, $F_{OL2}$) appropriées.

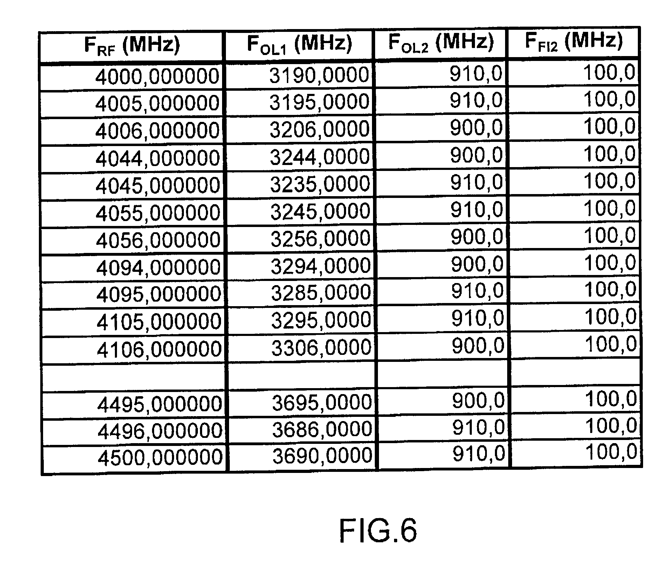

Dans une variante de réalisation de l'invention, les relations (5),(6),(7) et (8) sont pré exécutées afin de générer une table, telle que celle illustrée à la figure 6, qui contient pour chaque couple de fréquences ($F_{RF}$ $F_{FI2}$) le couple associé ($F_{OL1}$, $F_{OL2}$).

Le dispositif 500 est un circuit intégré numérique, par exemple un composant logique programmable, une mémoire morte ou tout autre dispositif permettant de délivrer à sa sortie une commande de fréquence des synthétiseurs 106,107.

Le dispositif de pilotage 500 associé aux deux synthétiseurs 106,107 de fréquence et aux trois chaines de gain 101,103,105 constituent un dispositif de double transposition de fréquence 501 selon l'invention.

La figure 6 présente dans un tableau les valeurs respectives des fréquences $F_{OL1}$ et $F_{OL2}$ qui sont générées par chaque synthétiseur de fréquence du récepteur TTC selon l'invention pour pouvoir couvrir toute la plage de fréquence en entrée du récepteur $F_{RF}$ sans discontinuité et dans le cas où la relation (5) s'applique. L'exemple de la figure 6 concerne une bande utile en entrée du récepteur comprise entre 4000 et 4500 MHz avec un second synthétiseur apte à générer, par exemple, soit la fréquence $F_{OL2,A} = 900$ MHz soit la fréquence $F_{OL2,B} = 910$ MHZ. La contrainte à respecter pour le choix de ces deux fréquences est que l'écart entre elle soit supérieur à 5 MHz et inférieur à 45 MHz. D'autres choix de fréquence sont possibles tant que les contraintes précitées sont respectées et ce dans le but de contourner la génération d'une fréquence $F_{OL1}$ située dans une bande interdite tout en garantissant une continuité dans la couverture de la bande de fréquence en entrée.

## Revendications

**1.** Dispositif (501) de double transposition en fréquence comportant au moins une première chaine (101) d'amplification et/ou de filtrage recevant un signal à une première fréquence $F_{RF}$, un premier mélangeur (102) de fréquences réalisant une première transposition en fréquence dudit signal vers une première fréquence intermédiaire $F_{FI1}$ et délivrant ledit signal transposé en entrée d'une deuxième chaine (103) d'amplification et/ou de filtrage, un second mélangeur (104) de fréquences réalisant une deuxième transposition vers une seconde fréquence intermédiaire $F_{FI2}$ du signal délivré par ladite deuxième chaine (103) et délivrant ledit signal transposé en entrée d'une troisième chaine (105) d'amplification et/ou de filtrage, un premier synthétiseur de fréquences fractionnaire (106), de bande de boucle B, apte à produire une première fréquence synthétisée $F_{OL1}$ en entrée dudit premier mélangeur (102) et un second synthétiseur de fréquences (107) entière ou fractionnaire apte à produire une seconde fréquence synthétisée $F_{OL2}$ en entrée dudit second mélangeur (104), **caractérisé en ce qu'**il comporte en outre des moyens (500) de pilotage des fréquences $F_{OL1}$, $F_{OL2}$ desdits premier et second synthétiseurs (106, 107) adaptés à exécuter les étapes suivantes :

○ Initialisation de la fréquence $F_{OL2}$ à une première valeur donnée $F_{OL2,A}$,
○ Pour un couple de fréquences ($F_{RF}$, $F_{FI2}$) donné, détermination de la fréquence $F_{OL1}$ à l'aide des relations suivantes :

■ Si $F_{RF} > F_{OL1}$ et $F_{FI1} < F_{OL2}$, $F_{RF} = F_{OL1} + F_{OL2} - F_{FI2}$ (5),
■ Si $F_{RF} > F_{OL1}$ et $F_{FI1} > F_{OL2}$, $F_{RF}$ $F_{OL1} + F_{OL2} + F_{FI2}$ (6),
■ Si $F_{RF} < F_{OL1}$ et $F_{FI1} > F_{OL2}$, $F_{RF} = F_{OL1} - F_{OL2} - F_{FI2}$ (7),
■ Si $F_{RF} < F_{OL1}$ et $F_{FI1} < F_{OL2}$, $F_{RF} = F_{OL1} - F_{OL2} + F_{FI2}$ (8),

○ Si la valeur obtenue de $F_{OL1}$ est comprise dans une bande de fréquence de borne inférieure A.$F_{REF}$ - B.X et de borne supérieure A.$F_{REF}$ + B.X où A est un entier strictement positif et X est un paramètre donné, modification de la fréquence $F_{OL2}$ à une seconde valeur $F_{OL2,B}$ déterminée de façon à ce que la différence, en valeur absolue, entre $F_{OL2,A}$ et $F_{OL2,B}$ respecte les deux conditions suivantes :

$$|F_{OL2,B} - F_{OL2,A}| > AF_{REF} + 2B.X$$

$$|F_{OL2,B} - F_{OL2,A}| < AF_{REF} - 2B.X$$

○ Transmission des valeurs de fréquence $F_{OL1}$ et $F_{OL2}$ auxdits synthétiseurs de fréquence (106,107).

**2.** Dispositif (501) de double transposition en fréquence selon la revendication 1 **caractérisé en ce que** lesdits moyens (500) de pilotage des fréquences $F_{OL1}$, $F_{OL2}$ sont adaptés à exécuter initialement et pour un ensemble de couples de fréquences $F_{RF}$, $F_{FI2}$ donnés lesdites étapes de calcul permettant de déterminer les valeurs associées des fréquences $F_{OL1}$,$F_{OL2}$ desdits synthétiseurs de fréquence (106,107) et à enregistrer l'ensemble des fréquences $F_{RF}$,$F_{FI2}$,$F_{OL1}$,$F_{OL2}$ obtenues dans une mémoire qu'ils comportent.

**3.** Dispositif (501) de double transposition en fréquence selon la revendication 1 ou 2 **caractérisé en ce que** lesdits moyens (500) de pilotage des fréquences $F_{OL1}$, $F_{OL1}$ sont réalisés par un circuit intégré de type ASIC ou FPGA comprenant au moins une mémoire.

**4.** Récepteur de télécommande pour un satellite géostationnaire comportant au moins des moyens de démodulation (108) d'un signal à la fréquence intermédiaire $F_{FI2}$ et un dispositif de double transposition selon l'une des revendications précédentes recevant un signal à la fréquence $F_{RF}$ et délivrant ledit signal transposé à la fréquence intermédiaire $F_{FI2}$.

**Claims**

**1.** Device (501) for dual frequency translation comprising at least a first amplification and/or filtering channel (101) which receives a signal at a first frequency $F_{RF}$, a first frequency mixer (102) which carries out a first frequency translation of the signal to a first intermediate frequency $F_{FI1}$ and which supplies the translated signal at the input of a second amplification and/or filtering channel (103), a second frequency mixer (104) carrying out a second translation to a second intermediate frequency $F_{FI2}$ of the signal supplied by the second channel (103) and providing the translated signal at the input of a third amplification and/or filtering channel (105), a first fractional frequency synthesiser (106) of a loop band B, which is capable of producing a first synthesised frequency $F_{OL1}$ at the input of the first mixer (102) and a second complete or fractional frequency synthesiser (107) which is capable of producing a second synthesised frequency $F_{OL2}$ at the input of the second mixer (104), **characterised in that** it further comprises means (500) for controlling the frequencies $F_{OL1}$ and $F_{OL2}$ of the first and second synthesisers (106, 107) which are capable of carrying out the following steps:

- initialising the frequency $F_{OL2}$ at a first given value $F_{OL2,A}$,
- for a given frequency pair ($F_{RF}$, $F_{FI2}$), determining the frequency $F_{OL1}$ using the following relationships:

  • if $F_{RF} > F_{OL1}$ and $F_{FI1} < F_{OL2}$, $F_{RF} = F_{OL1} + F_{OL2} - F_{FI2}$ (5),
  • if $F_{RF} > F_{OL1}$ and $F_{FI1} > F_{OL2}$, $F_{RF} = F_{OL1} + F_{OL2} + F_{FI2}$ (6),
  • if $F_{RF} < F_{OL1}$ and $F_{FI1} > F_{OL2}$, $F_{RF} = F_{OL1} - F_{OL2} - F_{FI2}$ (7),
  • if $F_{RF} < F_{OL1}$ and $F_{FI1} < F_{OL2}$, $F_{RF} = F_{OL1} + F_{OL2} + F_{FI2}$ (8),
  • if the value obtained for $F_{OL1}$ is in a frequency range having a lower limit $A.F_{REF} - B.X$ and an upper limit $A.F_{REF} + B.X$, where A is a strictly positive integer and X is a given parameter, modifying the frequency $F_{OL2}$ to a second value $F_{OL2,B}$ determined so that the difference, in absolute value, between $F_{OL2,A}$ and $F_{OL2,B}$ complies with the two following conditions:

$$\left| F_{OL2,B} - F_{OL2,A} \right| > AF_{REF} + 2B.X$$

$$\left| F_{OL2,B} - F_{OL2,A} \right| < AF_{REF} - 2B.X$$

  • transmitting the frequency values $F_{OL1}$ and $F_{OL2}$ to the frequency synthesisers (106, 107).

**2.** Device (501) for dual frequency translation according to claim 1, **characterised in that** the means (500) for controlling the frequencies $F_{OL1}$, $F_{OL2}$ are capable of carrying out, initially and for a group of given frequency pairs $F_{RF}$, $F_{FI2}$, the calculation steps which allow the associated frequency values $F_{OL1}$, $F_{OL1}$ of the frequency synthesisers (106, 107) to be determined, and of recording the group of frequencies $F_{RF}$, $F_{FI2}$, $F_{OL1}$, $F_{OL2}$ obtained in a store which they comprise.

3. Device (501) for dual frequency translation according to claim 1 or claim 2, **characterised in that** the means (500) for controlling the frequencies $F_{OL1}$, $F_{OL2}$ are produced by an integrated circuit of the type ASIC or FPGA comprising at least one store.

4. Remote-control receiver for a geostationary satellite comprising at least means (108) for demodulating a signal at the intermediate frequency $F_{FI2}$ and a dual translation device according to any one of the preceding claims, which receives a signal at the frequency $F_{RF}$ and which transmits the translated signal at the intermediate frequency $F_{FI2}$.

**Patentansprüche**

1. Vorrichtung (501) zur doppelten Frequenzumsetzung, die Folgendes umfasst: wenigstens eine erste Verstärkungs- und/oder Filterkette (101), die ein Signal mit einer ersten Frequenz $F_{RF}$ empfängt, einen ersten Frequenzmischer (102), der eine erste Frequenzumsetzung des Signals in eine erste Zwischenfrequenz $F_{F11}$ durchführt und das umgesetzte Signal an den Eingang einer zweiten Verstärkungs- und/oder Filterkette (103) anlegt, einen zweiten Frequenzmischer (104), der eine zweite Umsetzung auf eine zweite Zwischenfrequenz $F_{FI2}$ des von der zweiten Kette (103) angelegten Signals durchführt und das umgesetzte Signal an den Eingang einer dritten Verstärkungs- und/oder Filterkette (105) anlegt, einen ersten bruchzahligen Frequenzsynthesizer (106) im B-Band zum Produzieren einer ersten synthetisierten Frequenz $F_{OL1}$ Eingang des ersten Mischers (102) und einen zweiten ganzzahligen oder bruchzahligen Frequenzsynthesizer (107) zum Produzieren einer zweiten synthetisierten Frequenz $F_{OL2}$ am Eingang des zweiten Mischers (104), **dadurch gekennzeichnet, dass** sie darüber hinaus Mittel (500) zum Regeln der Frequenz $F_{OL1}$, $F_{OL2}$ des ersten und zweiten Synthesisers (106, 107) umfasst, die die folgenden Schritte ausführen können:

   - Initialisieren der Frequenz $F_{OL2}$ auf einen ersten gegebenen Wert $F_{OL2,A}$,
   - Ermitteln, für ein gegebenes Frequenzpaar ($F_{RF}$, $F_{FI2}$), der Frequenz $F_{OL1}$ mit Hilfe der folgenden Beziehungen:

   • wenn $F_{RF} > F_{OL1}$ und $F_{F11} < F_{OL2}$, $F_{RF} = F_{OL1} + F_{OL2} - F_{FI2}$ (5),
   • wenn $F_{RF} > F_{OL1}$ und $F_{F11} > F_{OL2}$, $F_{RF} = F_{OL1} + F_{OL2} + F_{FI2}$ (6),
   • wenn $F_{RF} < F_{OL1}$ und $F_{F11} > F_{OL2}$, $F_{RF} = F_{OL1} - F_{OL2} - F_{FI2}$ (7),
   • wenn $F_{RF} < F_{OL1}$ und $F_{F11} < F_{OL2}$, $F_{RF} = F_{OL1} - F_{OL2} + F_{FI2}$ (8),

   - Modifizieren, wenn der erhaltene Wert von $F_{OL1}$ zwischen eine untere Frequenzbandgrenze $A.F_{REF} - B.X$ und eine obere Grenze $A.F_{REF} + B.X$ fällt, wobei A eine streng positive ganze Zahl und X ein gegebener Parameter ist, der Frequenz $F_{OL2}$ auf einen ermittelten zweiten Wert $F_{OL2,B}$, so dass die Differenz, als Absolutwert, zwischen $F_{OL2,A}$ und $F_{OL2,B}$ eine der beiden folgenden Bedingungen erfüllt:

$$|F_{OL2,B} - F_{OL2,A}| > AF_{REF} + 2B.X$$

$$|F_{OL2,B} - F_{OL2,A}| < AF_{REF} - 2B.X$$

   - Senden der Frequenzwerte $F_{OL1}$ und $F_{OL2}$ zu den Frequenzsynthesizern (106, 107).

2. Vorrichtung (501) zur doppelten Frequenzumsetzung nach Anspruch 1, **dadurch gekennzeichnet, dass** die Mittel (500) zum Regeln der Frequenzen $F_{OL1}$, $F_{OL2}$ so ausgelegt sind, dass sie zunächst und für einen Satz von gegebenen Frequenzpaaren $F_{RF}$, $F_{FI2}$ die Rechenschritte ausführen, die das Ermitteln der assoziierten Frequenzwerte $F_{OL1}$, $F_{OL2}$ der Frequenzsynthesiser (106, 107) und das Speichern des Satzes von erhaltenen Frequenzen $F_{RF}$, $F_{FI2}$, $F_{OL1}$, $F_{OL2}$ in einem darin enthaltenen Speicher zulassen.

3. Vorrichtung (501) zur doppelten Frequenzumsetzung nach Anspruch 1 oder 2, **dadurch gekennzeichnet, dass** die Mittel (500) zum Regeln der Frequenzen $F_{OL1}$, $F_{OL2}$ durch eine integrierte ASIC- oder FPGA-Schaltung realisiert werden, die wenigstens einen Speicher enthält.

4. Fernsteuerungsempfänger für einen geostationären Satelliten, der wenigstens Mittel (108) zum Demodulieren eines Signals mit der Zwischenfrequenz $F_{FI2}$ und eine Vorrichtung zur doppelten Umsetzung nach einem der vorherigen Ansprüche umfasst, die ein Signal mit der Frequenz $F_{RF}$ empfängt und das auf die Zwischenfrequenz $F_{FI2}$ umgesetzte Signal liefert.

EP 2 388 928 B1

| Chaîne 101 | → | Mélangeur 102 | → | Chaîne 103 | → | Mélangeur 104 | → | Chaîne 105 | → | Démo-dulateur 108 | → |

Synthétiseur 106

Synthétiseur 107

10

FIG.1

```
┌──────────┐     ┌──────────────┐         ┌──────────────┐         ┌────────────────┐
│  Quartz  │     │ Division par P │  F_ref  │  Comparateur  │◄────────│    Diviseur     │◄──── N
│   201    │────►│      206       │────────►│      202      │         │  fractionnaire  │
└──────────┘     └──────────────┘         └──────────────┘         │     N+K/M       │◄──── M
                                                  │                  │      203        │
                                                  ▼                  └────────────────┘
                                          ┌──────────────┐                   ▲
                                          │  Filtre de   │         ┌──────────────┐
                                          │   boucle     │────────►│  Oscillateur │───► F_OL1
                                          │     205      │         │     204      │
                                          └──────────────┘         └──────────────┘
```

FIG.2

| N | K | N+K/M | FOL1 (MHz) | Fréquences parasites (MHz) |
|---|---|---|---|---|
| 60 | 0 | 60,00000 | 3000,0000 | 3000 |
| 60 | 1 | 60,00001 | 3000,0005 | 3000 et 3000,001 |
| 60 | 10 | 60,00010 | 3000,0050 | 3000 et 3000,01 |
| 60 | 100 | 60,00100 | 3000,0500 | 3000 et 3000,1 |
| 60 | 50000 | 60,50000 | 3025,0000 | 3000 et 3050 |
| 60 | 99999 | 60,99999 | 3049,9995 | 3049,9990 et 3050 |
| 61 | 0 | 61,00000 | 3050,0000 | 3050 |
| 61 | 1 | 61,00001 | 3050,0005 | 3050 et 3050,0010 |
| 79 | 99999 | 79,99999 | 3999,9995 | 3999,9990 et 4000 |
| 80 | 0 | 80,00000 | 4000,0000 | 4000 |

FIG.3

FIG.4

FIG.5

EP 2 388 928 B1

| $F_{RF}$ (MHz) | $F_{OL1}$ (MHz) | $F_{OL2}$ (MHz) | $F_{FI2}$ (MHz) |
|---|---|---|---|
| 4000,000000 | 3190,0000 | 910,0 | 100,0 |
| 4005,000000 | 3195,0000 | 910,0 | 100,0 |
| 4006,000000 | 3206,0000 | 900,0 | 100,0 |
| 4044,000000 | 3244,0000 | 900,0 | 100,0 |
| 4045,000000 | 3235,0000 | 910,0 | 100,0 |
| 4055,000000 | 3245,0000 | 910,0 | 100,0 |
| 4056,000000 | 3256,0000 | 900,0 | 100,0 |
| 4094,000000 | 3294,0000 | 900,0 | 100,0 |
| 4095,000000 | 3285,0000 | 910,0 | 100,0 |
| 4105,000000 | 3295,0000 | 910,0 | 100,0 |
| 4106,000000 | 3306,0000 | 900,0 | 100,0 |
| | | | |
| 4495,000000 | 3695,0000 | 900,0 | 100,0 |
| 4496,000000 | 3686,0000 | 910,0 | 100,0 |
| 4500,000000 | 3690,0000 | 910,0 | 100,0 |

FIG.6

## RÉFÉRENCES CITÉES DANS LA DESCRIPTION

**Documents brevets cités dans la description**

- US 2007224961 A
- US 2007087714 A
- WO 03023985 A